# FASCICULE DE BREVET EUROPEEN

(11) **EP 2 030 916 B1**
(45) Date de publication et mention de la délivrance du brevet: **10.03.2010**
(21) Numéro de dépôt: 08358007.6
(22) Date de dépôt: 22.08.2008
(51) Int. Cl.: B65G 17/06

(54) **Dispositif de manutention à chaînes à maillons flexibles et barreaux**
Wartungsvorrichtung für Ketten mit flexiblen Kettengliedern und Gittern
Handling appliance having chains with flexible links and bars

(30) Priorité: 30.08.2007 FR 0706082
(43) Date de publication de la demande: 04.03.2009
(73) Titulaire: PELLENC (Société Anonyme), 84120 Pertuis (FR)
(72) Inventeur: Pellenc, Roger, 84120 Pertuis (FR); Gialis, Jean-Marc, 84460 Cheval Blanc (FR)
(74) Mandataire: Marek, Pierre

(56) Documents cités:
- FR-A- 2 795 599
- GB-A- 2 134 763

## Description

La présente invention concerne un dispositif de manutention à chaînes à maillons flexibles et barreaux, notamment pour le convoyage de récoltes. En particulier, mais non limitativement, ce dispositif de manutention peut être utilisé avantageusement sur les machines à vendanger, sur les machines de ramassage de pommes de terre ou de carottes, pour le convoyage de la récolte. Il est cependant susceptibles d'autres applications agricoles ou industrielles.

On connaît des machines de récolte (FR-2.795.599) utilisant un convoyeur de récolte comportant des barreaux transversaux espacés reliés, par l'intermédiaire de leurs extrémités, à des chaînes d'entraînement latérales sans fin constituées de maillons métalliques reliés les uns aux autres par un axe d'articulation. Les convoyeurs de ce genre ont pour inconvénients : - d'être indémontables, de sorte que l'on ne peut procéder facilement au remplacement des maillons ou barreaux endommagés : - un fonctionnement relativement bruyant ; - de nécessiter de fréquents graissages ; un montage relativement complexe et donc coûteux.

On connaît aussi des chaînes de manutention selon lesquelles les extrémités des barreaux transversaux espacés sont fixées par rivetage ou par vulcanisation sur deux bandes transporteuses latérales souples et crantées.

Ces systèmes de manutention présentent plusieurs inconvénients majeurs tels que, par exemple :
- un diamètre d'enroulement important ;
- un coût élevé ;
- leur caractère indémontable.

L'invention a notamment pour but de proposer une solution aux problèmes posés par les inconvénients ci-dessus.

Selon l'invention, cet objectif est réalisé grâce à un dispositif de manutention dont les chaînes latérales sans fin sont constituées d'une succession de maillons flexibles reliés par l'intermédiaire des barreaux.

Suivant une autre disposition caractéristique, les maillons flexibles des chaînes latérales et les barreaux transversaux sont reliés par un système d'assemblage démontable.

Selon une autre disposition avantageuse, les maillons flexibles des chaînes latérales sont reliés par un système d'assemblage rigide.

Suivant un mode d'exécution préféré, les portions terminales au moins des barreaux présentent une section non rotative, par exemple une section polygonale ou ellipsoïdale, de préférence une section carrée, et sont engagées dans des orifices de forme complémentaire que présentent les extrémités des maillons flexibles, de sorte que ces derniers se trouvent reliés par un assemblage rigide.

Selon un mode d'exécution très avantageux, les maillons flexibles sont composés d'une armature interne souple constituée d'une tresse souple de forte résistance à la traction (réalisée à l'aide de fils métalliques ou de fibres synthétiques) et dont les extrémités opposées présentent une boucle dans laquelle est positionné un oeillet rigide permettant la fixation de l'une des extrémités d'un barreau, l'armature ainsi réalisée étant recouverte d'un revêtement souple servant de bande de roulement.

Les maillons flexibles ainsi réalisés ont pour particularité et avantage d'être suffisamment souples pour pouvoir s'enrouler sur de faibles diamètres ou arcs d'enroulement, tout en étant rigides à la traction, de sorte qu'ils ne subissent aucun allongement significatif en cours d'utilisation ; l'armature interne sert de fibre neutre et assure la résistance à la traction de la chaîne et limite l'allongement de l'ensemble.

Selon un premier mode de mise en oeuvre intéressant, le système de fixation démontable des barreaux sur les maillons flexibles comprend une fourchette-clip en forme de U comportant deux branches plates et un fond, placée en chevauchement sur les extrémités des barreaux et dont l'une des branches au moins est dotée de moyens coopérant avec un agencement complémentaire desdites extrémités et des orifices des oeillets des maillons pour réaliser cette fixation démontable.

Selon un exemple de mode de mise en oeuvre efficace, les extrémités libres des branches de la fourchette-clip sont repliées vers l'extérieur, de sorte à constituer un retour s'opposant au glissement transversal des maillons flexibles en direction de la partie centrale du convoyeur.

Selon un autre exemple de mise en oeuvre intéressant, l'une au moins des branches de la fourchette-clip est pourvue d'un ergot ou bossage orienté vers l'intérieur et disposé à proximité de son extrémité, ce bossage coopérant avec une empreinte ou cavité que présentent les barreaux, à proximité de leurs extrémités, de sorte à empêcher tout mouvement axial de ladite fourchette-clip en direction de l'extérieur du dispositif de convoyage.

Selon un autre exemple de mise en oeuvre avantageux, l'une au moins des branches de la fourchette clip est munie d'une languette flexible faisant saillie sur sa face externe et s'étendant en direction de son extrémité pliée, cette languette flexible coopérant avec une encoche ménagée dans la surface interne des orifices des oeillets des maillons flexibles, de sorte à empêcher tout glissement transversal vers l'extérieur des maillons externes et, par suite, également des maillons internes, montés sur les extrémités des barreaux.

Selon un deuxième mode d'exécution avantageux, le moyen de fixation démontable des barreaux dans les oeillets des maillons flexibles est constitué par un système de liaison "entre cuir et chair" comprenant une vis autotaraudeuse se vissant à la fois dans l'extrémité desdits barreaux et dans la paroi délimitant l'orifice desdits oeillets dans lequel est engagée ladite extrémité.

Outre leur caractère démontable, permettant le remplacement d'un maillon ou d'un barreau endommagé, les dispositifs de manutention selon l'invention ont encore pour avantage une facilité de montage qui devrait permettre d'abaisser les coûts de fabrication par rapport à ceux des systèmes analogues.

Selon une autre disposition caractéristique, les maillons flexibles comportent, sur l'une de leurs faces latérales, un renflement compris entre leurs extrémités pourvues des oeillets de montage des barreaux.

Cette forme permet d'intervertir la position des maillons flexibles en les disposant successivement en quinconce et de limiter ainsi la largeur et l'encombrement des chaînes latérales. Elle peut aussi, dans certaines applications constructives, favoriser un bon guidage des chaînes.

Les buts, caractéristiques et avantages ci-dessus, et d'autres encore, ressortiront mieux de la description qui suit et des dessins annexés dans lesquels :
La figure 1A est une vue en perspective d'une portion d'un dispositif de convoyage selon l'invention, selon un premier mode d'exécution.
La figure 1B est une vue analogue illustrant un deuxième mode d'exécution de ce dispositif de convoyage.
Les figures 2a, 2b, 2c sont des vues en perspective montrant trois exemples de réalisation des barreaux transversaux de ce dispositif.
La figure 3A est une vue en perspective de l'un des maillons composant les chaînes sans fin latérales du dispositif, selon le premier exemple de réalisation.
La figure 3B est une vue analogue illustrant un maillon selon le deuxième mode de réalisation.
Les figures 4A et 4B sont des vues en perspective éclatées des maillons représentés aux figures 3A et 3B respectivement.
La figure 5 est une vue en perspective, à plus grande échelle, d'une fourchette clip assurant la fixation des barreaux sur les chaînes latérales, selon le premier mode de réalisation.
La figure 6 est une vue en perspective d'une fourchette utilisée pour assurer le positionnement des maillons sur les barreaux, suivant le deuxième mode de réalisation.
La figure 7 est une vue en coupe et à plus grande échelle illustrant la fixation de l'une des extrémités d'un barreau sur deux maillons flexibles positionnés de manière inverse et reliés par ledit barreau, selon le premier mode d'exécution.
La figure 8a est une vue en coupe analogue à la figure 7 et montrant la fixation de l'une des extrémités d'un barreau sur deux maillons flexibles positionnés de manière inverse et reliée par ledit barreau, selon le deuxième mode d'exécution.
La figure 8b est une vue en coupe selon la ligne A-A de la figure 8a.
La figure 9 est une vue partielle montrant l'entraînement du convoyeur par un système d'entraînement positif.
La figure 10 est une vue partielle analogue à la figure 9 et illustrant l'entraînement du convoyeur par adhérence.
La figure 11 est une vue en perspective d'une entretoise se positionnant sur les portions extrêmes des barreaux de section polygonale, applicable au mode d'exécution utilisant un système d'entraînement positif.
Les figures 12 à 15 sont des vues en perspective de portions de convoyeurs, illustrant quelques exemples de montage d'organes fonctionnels sur les barreaux transversaux de ces derniers.

On se reporte auxdits dessins pour décrire deux modes d'exécution intéressants, bien que nullement limitatifs, du dispositif de manutention selon l'invention.

Sur les dessins annexés, les composants identiques qui remplissent les mêmes fonctions dans les deux modes de réalisation illustrés, sont désignés par les mêmes repères.

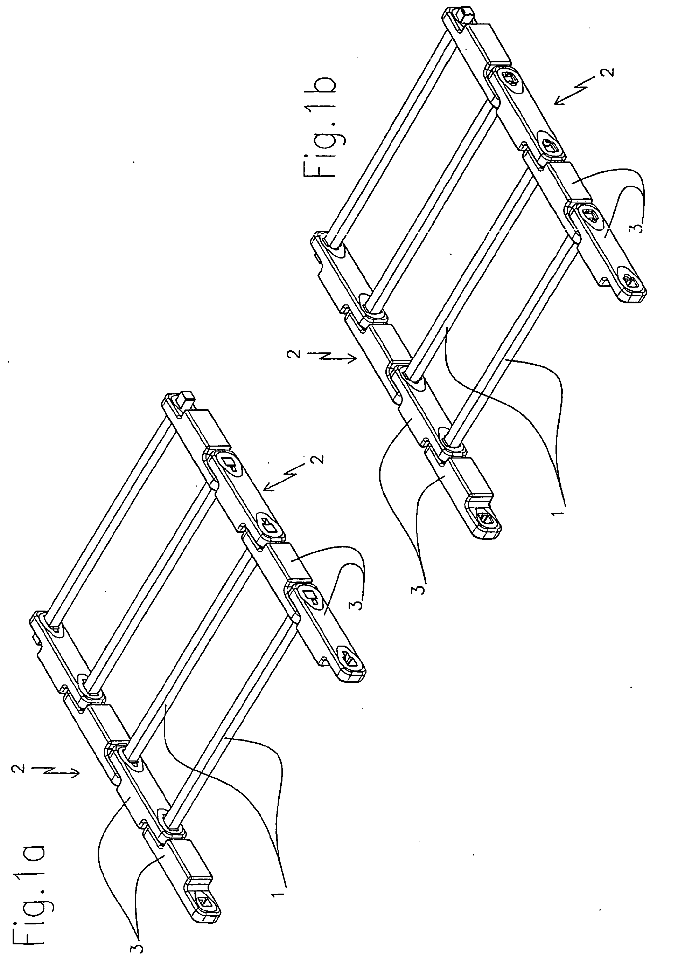

Comme le montrent notamment les figures 1A et 1B, ce dispositif de manutention est du genre constitué d'une pluralité de barreaux 1 espacés et parallèles montés entre deux chaînes latérales sans fin 2 composées d'une pluralité de maillons 3.

Selon l'invention, les maillons 3 permettant la liaison entre les différents barreaux 1 sont flexibles et avantageusement constitués de quatre parties :
- une armature souple 4 constituée d'une tresse souple de très forte résistance à la traction, par exemple d'une tresse plate de fils d'acier, ou de fils de verre, ou de fils de carbone, ou de fils d'aramide, ou autres fibres de synthèse telles que "Dyneema" (marque déposée), fibres de "Spectra" (marque déposée) ou autres, pouvant être cousue, collée, soudée ensemble, .... La tresse qui peut se présenter initialement sous forme de ruban est, par exemple, constituée par un enroulement aplati, comportant une portion centrale allongée 4a et des extrémités en forme de boucles 4b. Cette armature souple 4 constitue la fibre neutre du maillon flexible.
- deux oeillets 5 réalisés dans un matériau rigide (métal ou matière plastique) logés sans jeu notable à l'intérieur des boucles d'extrémité 4b de l'armature souple 4, la surface extérieure périphérique 5a de ces oeillets servant de support auxdites boucles. La section du trou 5b de ces oeillets destiné à l'engagement des extrémités des barreaux 1, est fonction de la section des extrémités de ces derniers. Elle peut être avantageusement polygonale, de préférence carrée. Elle peut être également circulaire ou autre.
- un revêtement souple extérieur 6, servant de bande de roulement. Ce revêtement peut, par exemple, être réalisé en polyuréthanne, ou autre matière plastique souple, ou en caoutchouc. Il peut être surmoulé sur l'ensemble constitué par l'armature souple 4 et les deux oeillets 5 ou être moulé séparément et être ensuite rapporté sur ledit ensemble.

Les maillons flexibles 3 ainsi réalisés comportent avantageusement, sur l'une de leurs faces latérales, un renflement 3a de forme globalement parallélépipédique, compris entre leurs extrémités opposées 3b pourvues des oeillets 5 de montage des barreaux 1.

Cette forme permet d'intervertir alternativement la position des maillons flexibles 3, ce qui permet d'obtenir une largeur régulière des chaînes latérales 2 et de limiter l'encombrement de ces dernières.

Les barreaux 1 servent à relier les maillons 3 entre eux et déterminent la largeur de la bande transporteuse ; ils permettent, en outre, l'entraînement de ladite bande par des roues dentées et la fixation d'outils divers réalisés en fonction du travail auquel est dédiée ladite bande transporteuse.

Les barreaux 1 peuvent être réalisés en tous matériaux rigides appropriés à l'utilisation du dispositif de manutention, par exemple en acier, inox, aluminium, matières plastiques, composites, ..., ou de mélanges de plusieurs de ces matériaux. Leur section peut être pleine ou creuse et de différentes formes, par exemple carrée, hexagonale, cylindrique, tubulaire, .... Dans le cas de section polygonale, leurs arêtes peuvent être arrondies, chanfreinées ou à angle vif.

De manière avantageuse, au moins les portions terminales 1 a des barreaux 1 présentent une section non rotative, par exemple une section polygonale ou ellipsoïdale, de préférence une section carrée, et sont engagées dans des orifices 5b de forme complémentaire que présentent les extrémités 3b des maillons 3, de sorte que ces derniers se trouvent reliés par un assemblage rigide.

Toutefois, selon une disposition intéressante, les barreaux 1 présentent également, dans leur partie comprise entre leurs deux extrémités, une section non rotative, de préférence une section carrée, permettant le positionnement fixe précis d'outils ou organes destinés à accomplir une tâche définie, sur lesdits barreaux, par emmanchement, surmoulage ou autrement ; ces outils étant, par exemple, constitués par des racleurs, godets, tasseaux, palettes à crible, etc., en rapport avec la fonction attribuée au dispositif de manutention.

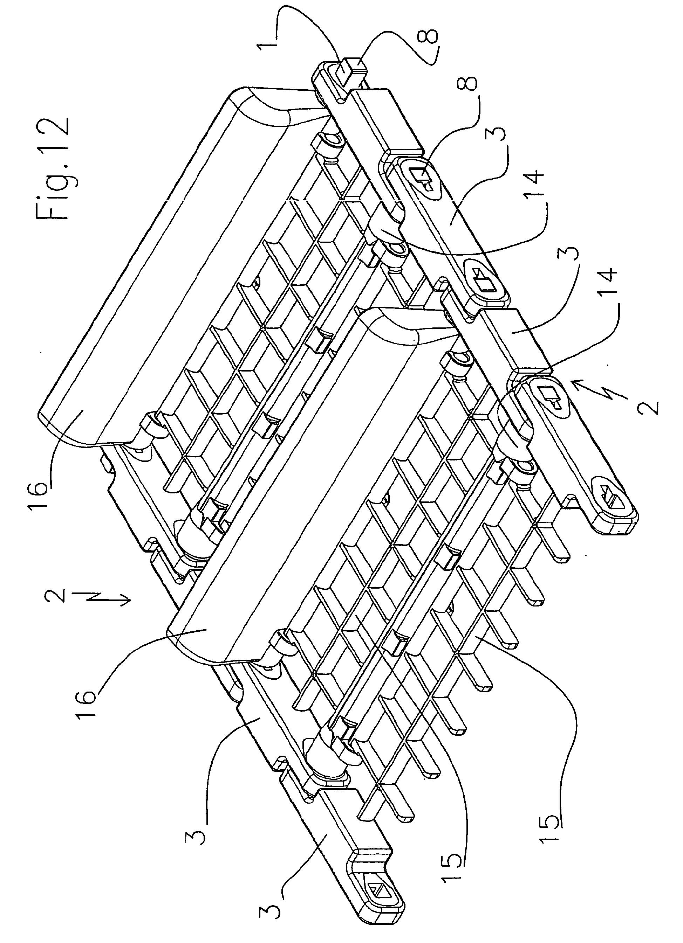

Les figures 12 à 15 illustrent des exemples de montage de tels équipements sur les barreaux du convoyeur selon l'invention.

Sur la figure 12, une palette ajourée 15 est montée avec une aptitude de pivotement d'amplitude limitée sur chaque barreau 1 ; d'autre part, un godet transversal 16 est également monté, mais fixement, sur un barreau sur deux seulement.

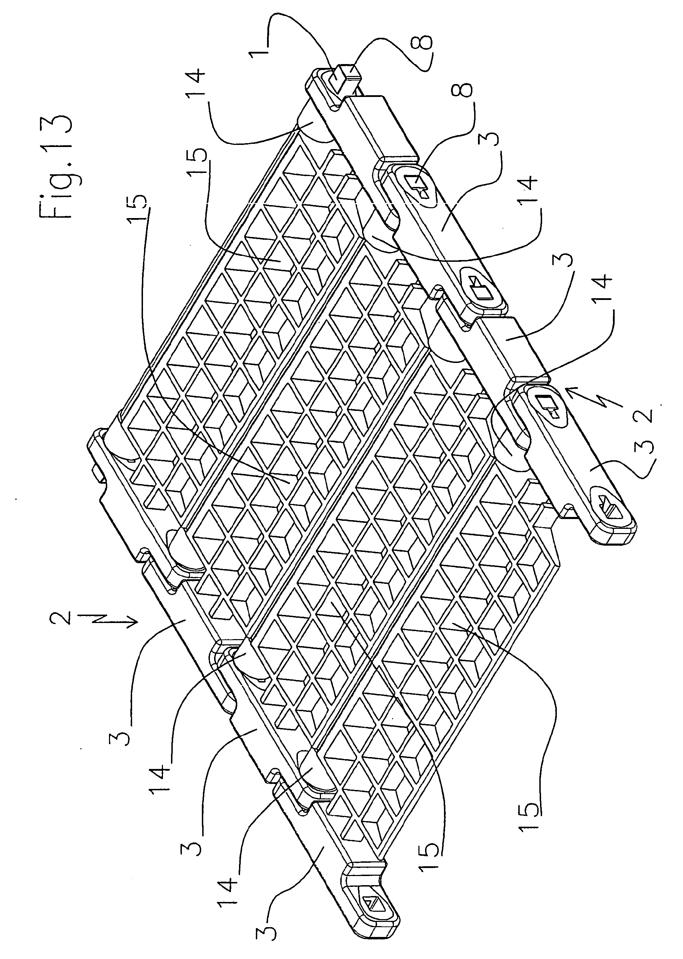

Le convoyeur représenté sur la figure 13 est uniquement équipé de palettes ajourées 15 montées avec une aptitude de pivotement sur l'ensemble des barreaux 1.

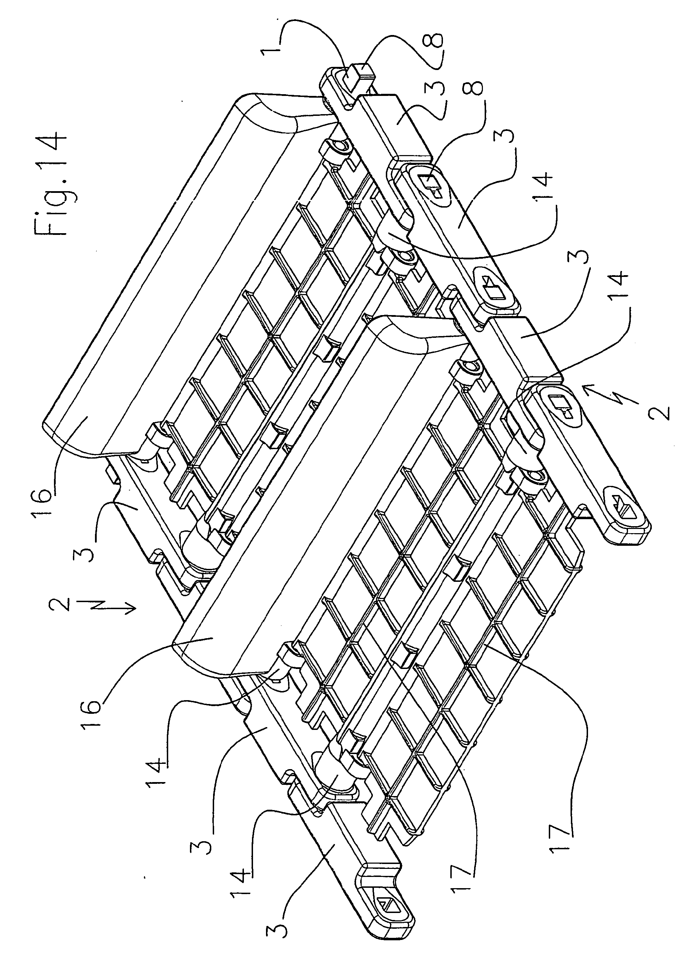

Sur la figure 14, une palette pleine 17 est montée avec une aptitude de pivotement d'amplitude limitée sur chaque barreau 1 et, d'autre part, un godet transversal 16 est monté fixement sur un barreau sur deux seulement.

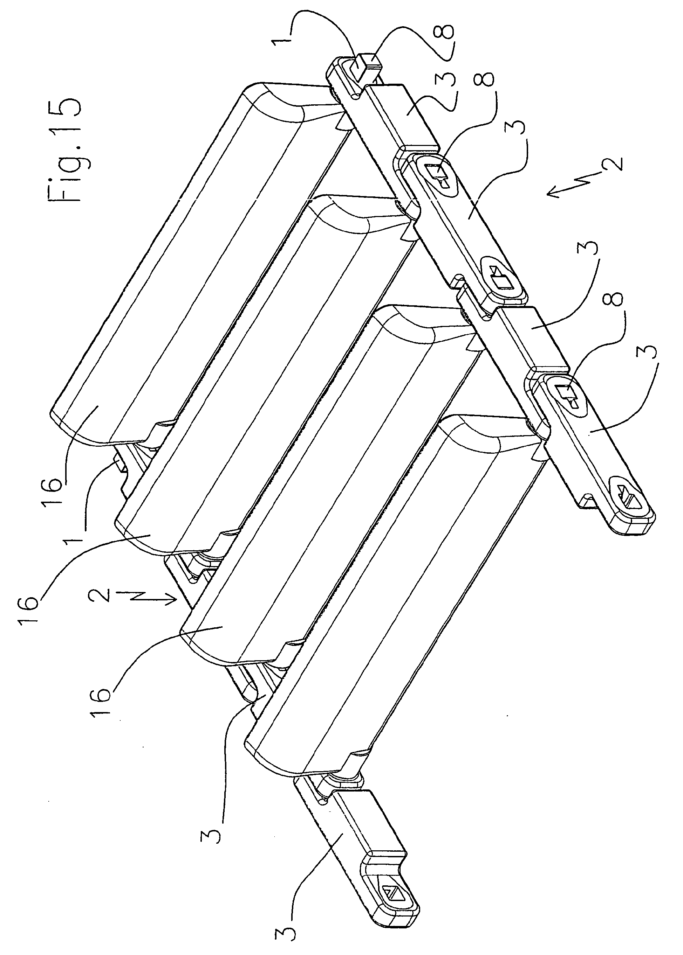

Le convoyeur illustré sur la figure 15 est uniquement équipé de godets transversaux 16 montés fixement sur l'ensemble des barreaux 1.

Dans certaines applications, les godets 15 pourraient remplir la fonction de tasseaux, ou être remplacées par des tasseaux ou des racloirs.

Les palettes ajourées 15 ou pleines 17 peuvent être pivotantes (comme indiqué ci-dessus) ou non.

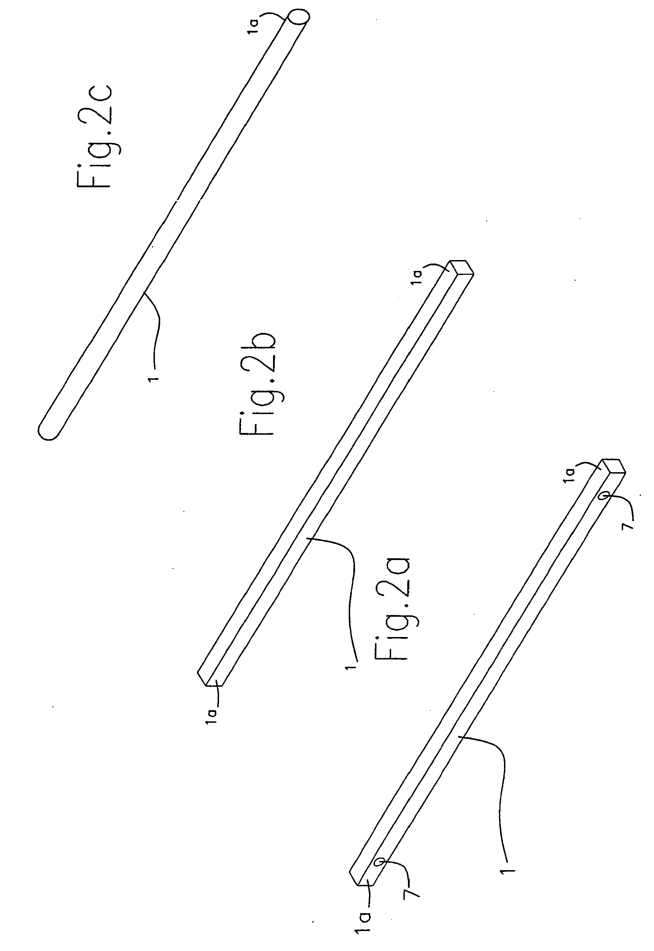

Les portions extrêmes 1 a du barreau 1 illustré la figure 2a, sont pourvues d'une empreinte ou cavité 7 dont l'utilité est expliquée ci-après.

Selon une autre disposition caractéristique, les barreaux 1 sont fixés de manière démontable aux maillons flexibles 3 des chaînes latérales 2.

Suivant un premier mode d'exécution avantageux, le système de fixation démontable des barreaux 1 sur les maillons flexibles 3 comprend une fourchette-clip 8 en forme de U comportant deux branches plates parallèles 8a', 8a" et un fond 8b. Ces fourchettes clips 8 sont placées en chevauchement sur les portions extrêmes 1 a des barreaux 1. L'une de leurs branches (branche 8a' selon les dessins annexés) est pourvue de moyens coopérant avec un agencement complémentaire desdites portions extrêmes et des orifices 5b des oeillets 5, pour réaliser l'assemblage démontable des barreaux 1 et des maillons 3.

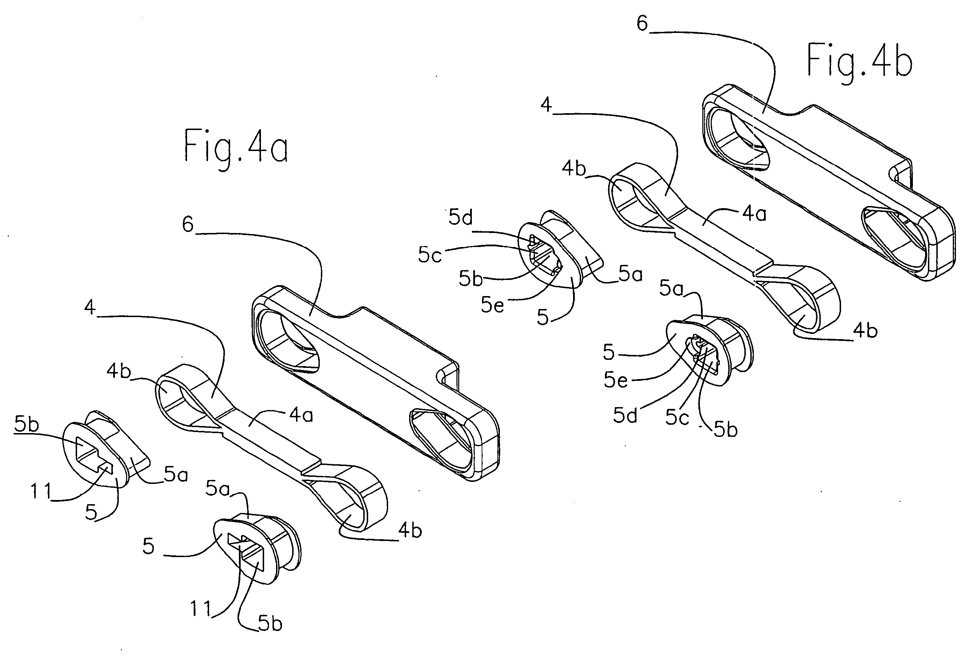

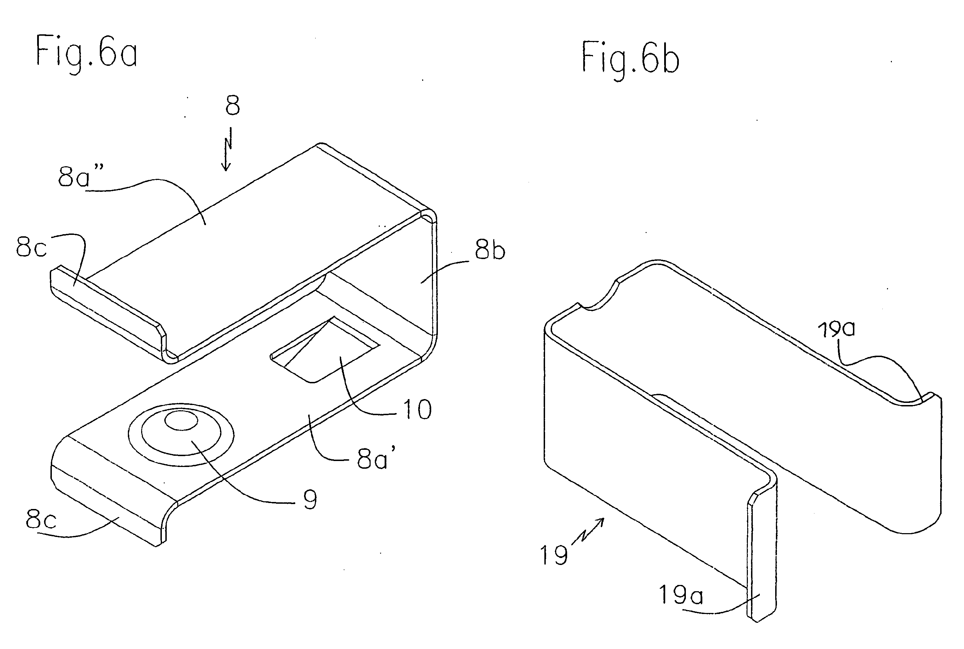

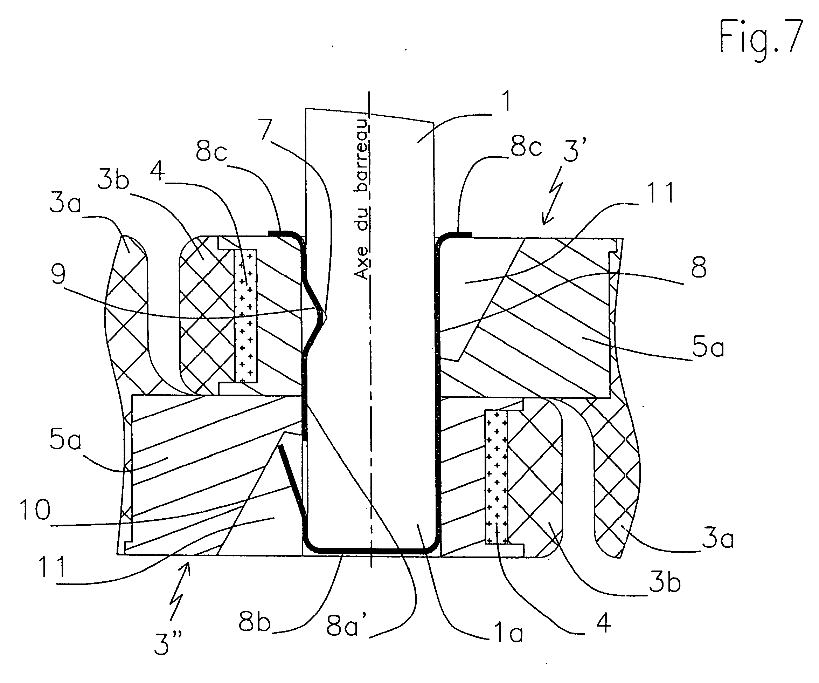

Selon l'exemple de réalisation illustré, plus particulièrement aux figures 4A, 5, 6 et 7, les extrémités libres des branches 8a', 8a", sont repliées vers l'extérieur, de sorte à constituer un retour 8c. Les extrémités 3b des maillons internes 3' prennent appui contre les retours 8c, de sorte que ces derniers s'opposent au glissement transversal desdits maillons internes 3' et, par conséquent, également au glissement des maillons externes 3", en direction de la partie centrale du convoyeur (figures 1A et 7).

Selon cet exemple de réalisation avantageux, la branche 8a' des fourchettes clips 8 est dotée d'un ergot ou bossage 9 orienté vers l'intérieur desdites fourchettes et disposé à proximité de l'extrémité libre de ladite branche. En position d'assemblage des barreaux 1 et des maillons 3, cet ergot 9 est logé dans l'empreinte 7 dont est pourvue chaque portion extrêmes 1a des barreaux 1, de sorte à empêcher tout mouvement axial des fourchettes clips 8 en direction de l'extérieur des chaînes latérales, c'est-à-dire tout délogement accidentel desdites fourchettes clips.

La branche 8a' des fourchettes clips 8 est munie d'une languette flexible 10, par exemple obtenue par découpage, cette languette flexible faisant saillie sur la face externe de ladite branche et s'étendant en direction de l'extrémité libre de cette dernière. D'autre part, la surface interne des orifices 5b des oeillets 5 est munie d'une encoche 11 s'ouvrant sur la face extérieure desdits oeillets. Dans la position fonctionnelle d'assemblage des barreaux 1 et des maillons 3, la languette flexible 10 des fourchettes clips 8 d'assemblage se trouve engagée dans l'encoche 11 des oeillets 5 des maillons flexibles externes 3", en empêchant, de la sorte, tout glissement transversal vers l'extérieur desdits maillons externes et, par suite, également des maillons internes 3", montés sur les portions extrêmes 1 a des barreaux 1. Les différents composants du dispositif de manutention se trouvent ainsi solidement assemblés les uns aux autres.

Pour le montage de ce premier mode de réalisation du dispositif de manutention selon l'invention, les fourchettes clips 8 sont d'abord placées en chevauchement sur les portions terminales 1 a des barreaux 1 de sorte qu'elles se trouvent en appui contre l'extrémité de ces derniers par l'intermédiaire de leur fond 8b, tandis que leur bossage 9 se trouve engagé dans l'empreinte 7 ménagée dans lesdites portions terminales, de sorte que lesdites fourchettes clips se trouvent maintenues sur ces dernières. Les maillons internes 3' sont ensuite emmanchés sur les portions extrêmes 1 a des barreaux 1 munies des fourchettes clips d'assemblage 8 jusqu'à ce qu'ils viennent en butée contre les retours 8c desdites fourchettes clips. Les maillons externes 3" sont enfin emmanchés sur les extrémités 1a des barreaux, dans une position inversée par rapport à celle des maillons internes 3', leur blocage sur lesdits barreaux s'opérant automatiquement dès que la languette de verrouillage 10 des fourchettes clips s'engage par effet d'élasticité dans l'encoche 11 ménagée dans l'ouverture 5b des oeillets 5.

Le démontage d'un ou plusieurs maillons flexibles 3 peut s'opérer facilement et rapidement, lorsque la chaîne n'est plus soumise à la traction. Il suffit, en effet, de "déclipser" ou dégager la languette flexible de verrouillage 10 de l'encoche 11, par exemple à l'aide d'un simple tournevis non dédié ou outil analogue pour pouvoir extraire successivement le maillon externe 3", puis, si nécessaire, le maillon interne 3' par coulissement sur les portions terminales 1 a des barreaux 1.

Cette possibilité de démontage et de montage simples permet le remplacement d'un ou plusieurs maillons et/ou d'un ou plusieurs barreaux dans de bonnes conditions de rapidité et de facilité.

La forme particulière des maillons et leur disposition alternativement inversée permet d'obtenir des chaînes continues d'encombrement limité.

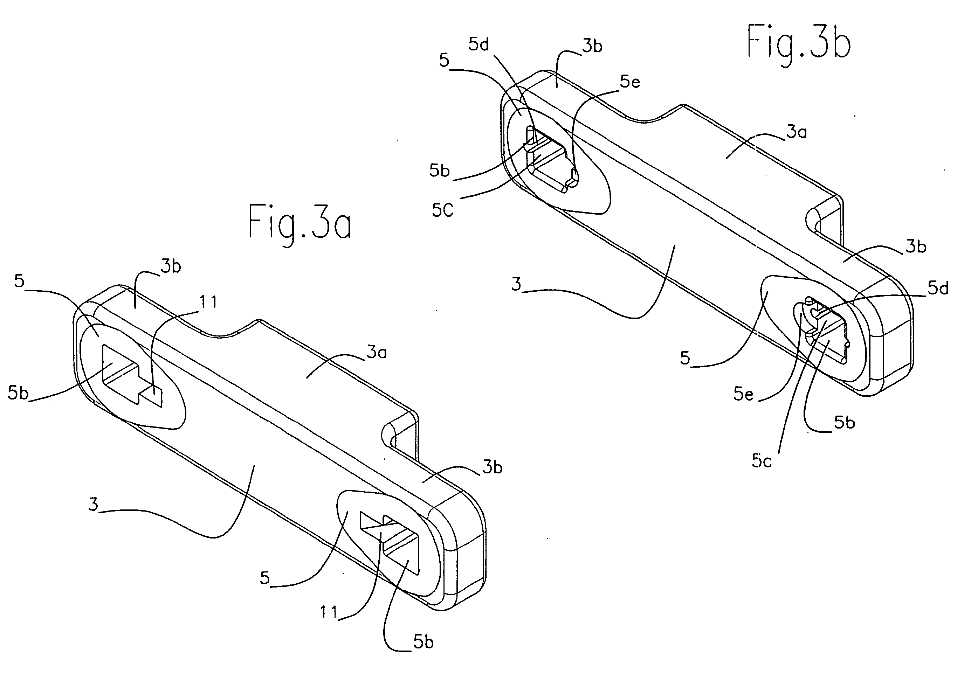

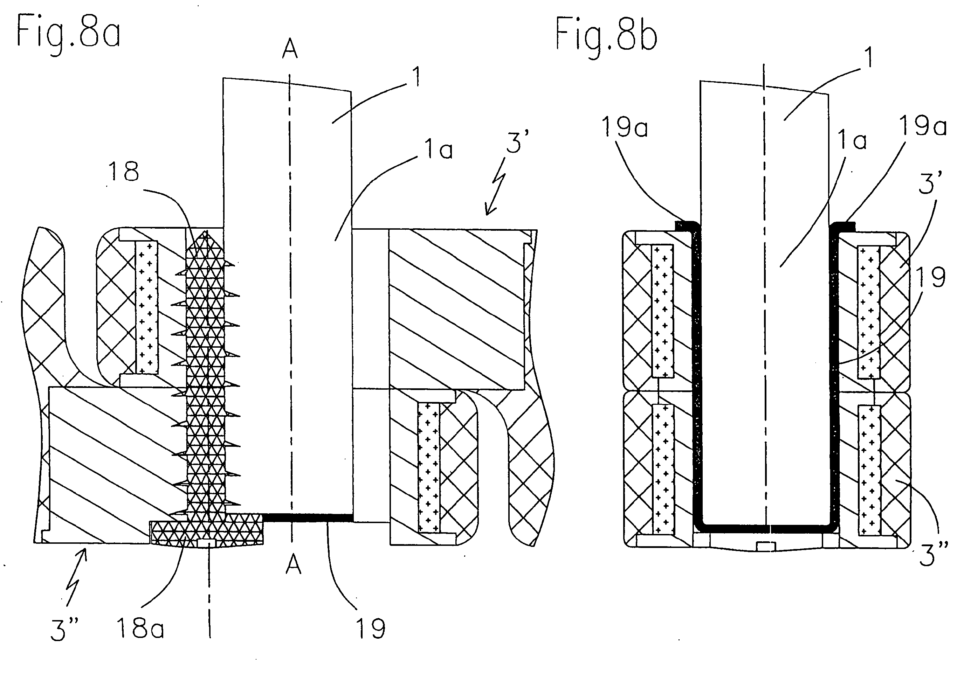

Selon le deuxième exemple de réalisation avantageux du dispositif de manutention de l'invention, illustré aux figures 1B, 3B, 4B, 8A et 8B, le moyen de fixation démontable des barreaux 1 dans les oeillets 5 des maillons flexibles 3, est constitué par un système de liaison "entre cuir et chair" comprenant une vis auto-taraudeuse 18 se vissant, à la fois, dans l'extrémité 1a desdits barreaux et dans la paroi interne 5c délimitant l'orifice 5b desdits oeillets dans lequel est engagée ladite extrémité.

Pour faciliter le vissage de la vis taraudeuse de liaison 18, la paroi interne 5c est pourvue de gorges opposées de guidage 5d orientées parallèlement à l'axe des orifices 5b et dans lesquelles ladite vis se trouve partiellement implantée. En outre, un enfoncement ou lamage 5e dans lequel débouche l'une des gorges de guidage 5d, est ménagé dans la surface externe des parties extrêmes opposées 3a des maillons 3, pour le logement de la tête 18a de la vis taraudeuse 18, afin que les chaînes 2 constituées par lesdits maillons ne présentent aucune aspérité sur leur côté extérieur.

Une fourchette métallique 19 en forme de U comportant deux branches plates parallèles, est placée en chevauchement sur les portions extrêmes opposées 1 a des barreaux 1. Les extrémités libres des branches de cette fourchette 19 sont repliées vers l'extérieur, de sorte à constituer des retours 19a contre lesquels s'appuie le maillon interne 3' et s'opposant ainsi au glissement transversal dudit maillon interne et du maillon externe 3", en direction de la partie centrale du convoyeur. La présence de cette fourchette de butée a, d'autre part, pour avantage, d'augmenter la durée de vie de l'assemblage, en particulier lorsque les barreaux sont exécutés en fibres de carbone ou matériau analogue.

Pour le montage du dispositif selon ce deuxième mode de réalisation, les fourchettes 19 sont d'abord placées en chevauchement sur les portions terminales 1a des barreaux 1, de sorte qu'elles se trouvent en appui contre les extrémités de ces derniers, par l'intermédiaire de leur fond. Les maillons internes 3' sont alors emmanchés sur les portions extrêmes 1 a des barreaux 1, jusqu'à ce qu'ils se trouvent en butée contre les retours 19a desdites fourchettes 19. Les maillons externes 3" sont ensuite emmanchés sur les extrémités 1a des barreaux 1, dans une position inversée par rapport à celle des maillons internes 3'. Le blocage des maillons internes 3' et externes 3" sur les barreaux 1 s'opère au moyen de la vis taraudeuse 18 vissée "entre cuir et chair" par exemple au moyen d'une visseuse.

On comprend que ce montage peut s'effectuer rapidement et facilement. Il en va de même pour le démontage, par exemple pour remplacer un ou plusieurs maillons endommagés.

L'entraînement du convoyeur selon l'invention peut être réalisé de deux façons : par adhérence ou, de préférence et avantageusement, par entraînement positif.

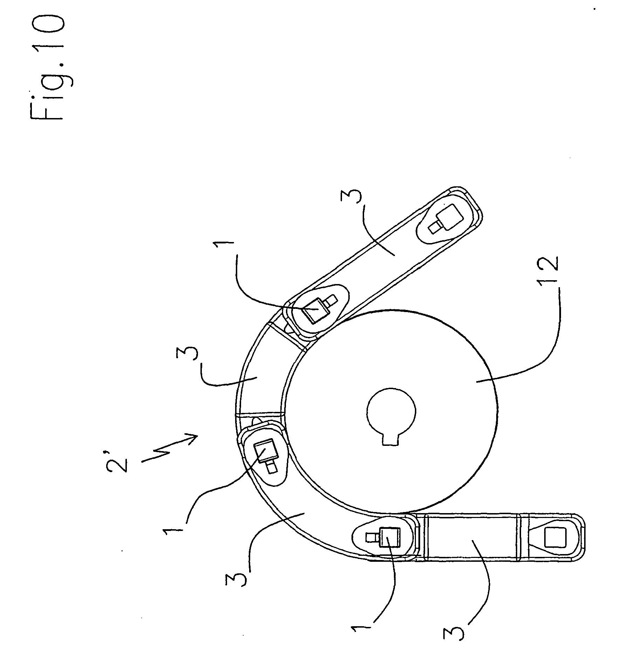

Pour l'entraînement par adhérence, les chaînes latérales 2' du convoyeur s'appuient et s'enroulent sur des poulies 12 lisses ou non (figure 10), par exemple exécutées en acier ou en matière plastique rigide. La liaison entre les poulies 12 et les maillons 3 s'opère par adhérence, de manière comparable à une transmission par lien flexible.

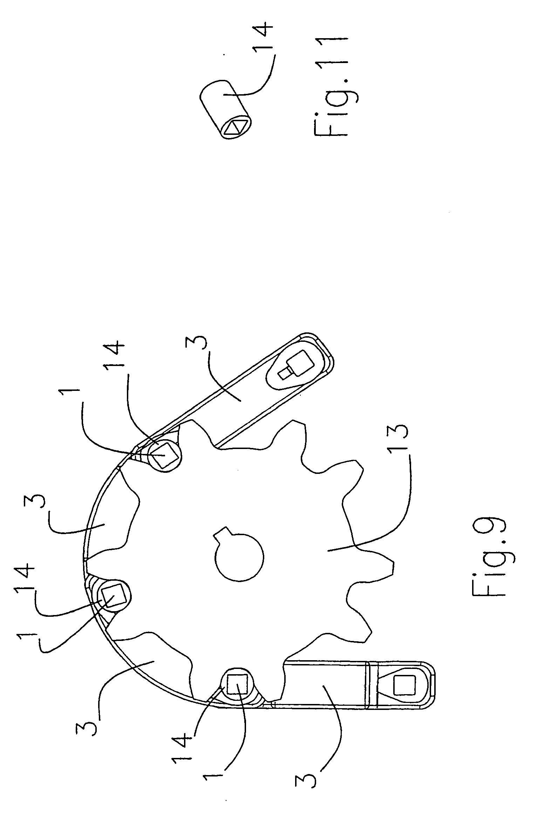

Pour l'entraînement positif, on utilise le principe de la transmission par chaîne. Dans ce cas, les barreaux 1 du convoyeur engrènent avec des pignons 13 assurant l'entraînement du convoyeur. Lorsque les barreaux présentent une section polygonale, par exemple carrée, des entretoises cylindrique 14 (figures 9 et 11) peuvent être positionnées sur lesdits barreaux, afin de permettre un rattrapage entre la section des barreaux 1 et la section des pignons 14, de sorte à obtenir de bonnes conditions d'engrènement desdits barreaux et pignons et un bon entraînement du convoyeur.

## Revendications

1. Dispositif de manutention comportant des barreaux transversaux espacés reliés, par l'intermédiaire de leurs extrémités, à des chaînes d'entraînement latérales sans fin constituées de maillons, **caractérisé en ce que** lesdites chaînes (2) sont constituées d'une succession de maillons flexibles (3), reliés par l'intermédiaire des barreaux.

2. Dispositif de manutention selon la revendication 1, **caractérisé en ce que** les maillons flexibles (3) sont composés d'une armature interne souple (4) constituée d'une tresse souple de forte résistance à la traction et dont les extrémités opposées présentent une boucle (4b) dans laquelle est positionné un oeillet rigide (5) permettant la fixation de l'une des extrémités (1a) d'un barreau (1), l'armature (4) ainsi réalisée étant recouverte d'un revêtement souple (6) servant de bande de roulement.

3. Dispositif de manutention suivant l'une des revendications 1 ou 2, **caractérisé en ce que** les maillons flexibles (3) des chaînes latérales (2) et les barreaux transversaux (1) sont reliés par un assemblage démontable.

4. Dispositif de manutention suivant l'une quelconque des revendications 1 à 3, **caractérisé en ce que** les maillons flexibles (3) comportent, sur l'une de leurs faces latérales, un renflement (3a) compris entre leurs extrémités (3a) de montage des barreaux (1), et **en ce que** la position des maillons (3) est alternée, de sorte que les chaînes latérales sans fin (2) présentent une largeur régulière.

5. Dispositif de manutention selon l'une quelconque des revendications 1 à 4, **caractérisé en ce que** les barreaux (1) présentent, dans leur portion comprise entre leurs extrémités (1a) une section non rotative, de préférence une section carrée.

6. Dispositif de manutention selon l'une quelconque des revendications 1 à 5, **caractérisé en ce que** des outils ou organes (15, 16, 17) destinés à accomplir une tâche définie sont montés fixement ou de manière basculante sur les barreaux (1).

7. Dispositif de manutention selon l'une quelconque des revendications 1 à 5, **caractérisé en ce qu'**au moins les portions terminales (1a) des barreaux (1) présentent une section non rotative, polygonale ou ellipsoïdale, de préférence une section carrée, et sont engagées dans des orifices (5b) de forme complémentaire que présentent les extrémités (3b) des maillons (3), de sorte que ces derniers se trouvent reliés par un assemblage rigide.

8. Dispositif de manutention selon l'une quelconque des revendications 3 à 7, **caractérisé en ce que** le système de fixation démontable des barreaux (1) sur les maillons flexibles (3) comprend une fourchette-clip en forme de U (8) comportant deux branches plates (8a', 8a") et un fond (8b), placée en chevauchement sur les extrémités (1a) des barreaux (1) et dont l'une (8a') des branches au moins est dotée de moyens coopérant avec un agencement complémentaire desdites extrémités (1a) et des orifices (5b) des oeillets (5) des maillons (3) pour réaliser cette fixation démontable.

9. Dispositif de manutention selon la revendication 8, **caractérisé en ce que** les extrémités libres (8c) des branches (8a', 8b") de la fourchette-clip (8) sont repliées vers l'extérieur, de sorte à constituer un retour s'opposant au glissement transversal des maillons flexibles (3) en direction de la partie centrale du convoyeur.

10. Dispositif de manutention suivant l'une des revendications 8 ou 9, **caractérisé en ce que** l'une (8a') au moins des branches (8a', 8a") de la fourchette-clip (8) est pourvue d'un ergot ou bossage (9) orienté vers l'intérieur et disposé à proximité de son extrémité libre (8c), ce bossage (9) coopérant avec une empreinte ou cavité (7) que présentent les barreaux (1), à proximité de leurs extrémités, de sorte à empêcher tout mouvement axial de ladite fourchette-clip en direction de l'extérieur du dispositif de convoyage.

11. Dispositif de manutention selon l'une quelconque des revendications 8 à 10, **caractérisé en ce que** l'une au moins (8a') des branches (8a', 8a") de la fourchette clip (8) est munie d'une languette flexible (10) faisant saillie sur sa face externe et s'étendant en direction de son extrémité libre (8c), cette languette flexible (10) coopérant avec une encoche (11) ménagée dans la surface interne des orifices (5b) des oeillets (5) des maillons flexibles (3), de sorte à empêcher tout glissement transversal vers l'extérieur des maillons externes (3") et, par suite, également des maillons internes (3') montés sur les extrémités (1a) des barreaux (1).

12. Dispositif de manutention selon l'une quelconque des revendications 2 à 7, **caractérisé en ce que** la fixation des barreaux (1) sur les maillons flexibles (3) est constitué par un système de liaison "entre cuir et chair" comprenant une vis taraudeuse (18) se vissant à la foi dans l'extrémité (1a) desdits barreaux (1) et dans la paroi (5c) délimitant l'orifice (5b) des oeillets (5) desdits maillons (3) dans lequel est engagée ladite extrémité (1a).

13. Dispositif de manutention suivant la revendication 12, **caractérisé en ce que** la paroi interne (5c) délimitant les orifices (5b) des oeillets (5) des maillons (3), est pourvue de gorges opposées (5d) orientées parallèlement à l'axe des orifices (5b) et dans lesquelles la vis taraudeuse de liaison (18) se trouve partiellement implantée.

14. Dispositif de manutention selon la revendication 13, **caractérisé en ce qu'**un enfoncement ou lamage (5e) dans lequel débouche l'une des gorges (5d) est ménagé dans la surface externe des portions extrêmes (3a) des maillons (3).

15. Dispositif de manutention selon l'une quelconque des revendications 12 à 14, **caractérisé en ce qu'**une fourchette métallique (19) en forme de U comportant deux branches plates parallèles, est placée en chevauchement sur les portions extrêmes (1a) des barreaux (1), les extrémités libres (19a) de cette fourchette (19) étant pliées vers l'extérieur et constituent des retours contre lesquels sont appuyés les maillons intérieurs (3') de la chaîne (2).

## Claims

1. A handling apparatus comprising spaced transverse bars connected by way of their ends to lateral endless drive chains formed by links, **characterised in that** said chains (2) are formed by a succession of flexible links (3) connected by way of the bars.

2. A handling apparatus according to claim 1 **characterised in that** the flexible links (3) are composed of an internal flexible fitting (4) formed by a flexible braid of high tensile strength and the opposite ends of which have a loop (4) in which there is positioned a rigid eyelet (5) permitting fixing of one of the ends (1a) of a bar (1), the fitting (4) provided **in that** way being covered by a flexible coating (6) serving as a running band.

3. A handling apparatus according to one of claims 1 and 2 **characterised in that** the flexible links (3) of the lateral chains (2) and the transverse bars (1) are connected by a dismantleable assembly.

4. A handling apparatus according to any one of claims 1 to 3 **characterised in that** the flexible links (3), on one of their lateral faces, comprise an enlargement portion (3a) between their ends (3a) for mounting the bars (1) and that the position of the links (3) is alternated so that the lateral endless chains (2) are of a regular width.

5. A handling apparatus according to any one of claims 1 to 4 **characterised in that** in their portion between their ends (1a) the bars (1) have a non-rotatable section, preferably a square section.

6. A handling apparatus according to any one of claims 1 to 5 **characterised in that** tools or members (15, 16, 17) intended to perform a defined task are mounted fixedly or pivotably on the bars (1).

7. A handling apparatus according to any one of claims 1 to 5 **characterised in that** at least the terminal portions (1a) of the bars (1) are of a non-rotatable, polygonal or ellipsoidal section, preferably a square section, and are engaged in orifices (5b) of complementary shape provided by the ends (3b) of the links (3) in such a way that the latter are connected by a rigid assembly.

8. A handling apparatus according to any one of claims 3 to 7 **characterised in that** the system for dismantleably fixing the bars (1) on the flexible links (3) comprise a U-shaped fork clip (8) comprising two flat limbs (8a', 8a") and a bottom (8b), which is placed in straddling relationship on the ends (1a) of the bars (1) and of which one (8a') of the limbs at least is provided with means co-operating with a complementary arrangement of said ends (1a) and orifices (5b) of the eyelets (5) of the links (3) to provide said dismantleable fixing.

9. A handling apparatus according to claim 8 **characterised in that** the free ends (8c) of the limbs (8a', 8b") of the fork clip (8) are bent outwardly so as to constitute a return portion opposing transverse sliding movement of the flexible links (3) in the direction of the central part of the conveyor.

10. A handling apparatus according to one of claims 8 and 9 **characterised in that** one (8a') at least of the limbs (8a', 8a") of the fork clip (8) is provided with a lug or boss (9) which is oriented inwardly and disposed in the proximity of its free end (8c), the boss (9) co-operating with a recess or cavity (7) in the bars (1) in the proximity of their ends so as to prevent any axial movement of said fork clip in the direction of the exterior of the conveyor apparatus.

11. A handling apparatus according to any one of claims 8 to 10 **characterised in that** one at least (8a') of the limbs (8a', 8a") of the fork clip (8) is provided with a flexible tongue portion (10) projecting on its outside face and extending in the direction of its free end (8c), said flexible tongue portion (10) co-operating with a notch (11) provided in the internal surface of the orifices (5b) of the eyelets (5) of the flexible links (3) so as to prevent any transverse sliding movement towards the exterior of the external links (3") and consequently also of the internal links (3') mounted on the ends (1a) of the bars (1).

12. A handling apparatus according to any one of claims 2 to 7 **characterised in that** the fixing for the bars (1) on the flexible links (3) is formed by an 'under the skin' connecting system comprising a self-tapping screw (18) which is screwed both into the end (1a) of said bars (1) and into the wall (5c) defining the orifice (5b) of the eyelets (5) of said links (3), in which said end (1a) is engaged.

13. A handling apparatus according to claim 12 **characterised in that** the internal wall (5c) delimiting the orifices (5b) of the eyelets (5) of the links (3) is provided with opposed grooves (5d) oriented parallel to the axis of the orifices (5b) and in which the self-tapping connecting screw (18) is partially inserted.

14. A handling apparatus according to claim 13 **characterised in that** a depression or spot facing (5e) into which one of the grooves (5d) opens is provided in the external surface of the end portions (3a) of the links (3).

15. A handling apparatus according to any one of claims 12 to 14 **characterised in that** a U-shaped metallic fork (19) comprising two flat parallel limbs is placed in straddling relationship on the end portions (1a) of the bars (1), the free ends (19a) of said fork (19) being bent outwardly and constituting return portions against which the internal links (3') of the chain (2) are supported.

## Patentansprüche

1. Fördervorrichtung, die beabstandete Querstäbe aufweist, welche über ihre Enden mit aus Kettengliedern bestehenden, endlosen seitlichen Antriebsketten verbunden sind, **dadurch gekennzeichnet, dass** die Ketten (2) aus einer Folge von flexiblen Kettengliedern (3) bestehen, die mittels der Stäbe verbunden sind.

2. Fördervorrichtung nach Anspruch 1, **dadurch gekennzeichnet, dass** die flexiblen Kettenglieder (3) aus einer biegsamen inneren Bewehrung (4) bestehen, die von einem biegsamen Geflecht mit hoher Zugfestigkeit gebildet wird und deren gegenüberliegende Enden eine Schlaufe (4b) aufweisen, in der eine steife Öse (5) positioniert ist, die die Befestigung eines der Enden (1a) eines Stabs (1) ermöglicht, wobei die so hergestellte Bewehrung (4) mit einer biegsamen Verkleidung (6) bedeckt ist, die als Lauffläche dient.

3. Fördervorrichtung nach einem der Ansprüche 1 oder 2, **dadurch gekennzeichnet, dass** die flexiblen Kettenglieder (3) der seitlichen Ketten (2) und die Querstäbe (1) durch einen lösbaren Zusammenbau verbunden sind.

4. Fördervorrichtung nach einem der Ansprüche 1 bis 3, **dadurch gekennzeichnet, dass** die flexiblen Kettenglieder (3) auf einer ihrer Seitenflächen eine Verdickung (3a) aufweisen, die zwischen ihren Enden (3b) zur Montage der Stäbe (1) liegt, und dass die Stellung der Kettenglieder (3) abwechselnd ist, so dass die endlosen seitlichen Ketten (2) eine gleichmäßige Breite aufweisen.

5. Fördervorrichtung nach einem der Ansprüche 1 bis 4, **dadurch gekennzeichnet, dass** die Stäbe (1) in ihrem Abschnitt zwischen ihren Enden (1a) einen nicht drehbaren Querschnitt, vorzugsweise einen quadratischen Querschnitt, aufweisen.

6. Fördervorrichtung nach einem der Ansprüche 1 bis 5, **dadurch gekennzeichnet, dass** Werkzeuge oder Elemente (15, 16, 17), die dazu bestimmt sind, eine bestimmte Aufgabe auszuführen, fest oder schwenkbar auf die Stäbe (1) montiert sind.

7. Fördervorrichtung nach einem der Ansprüche 1 bis 5, **dadurch gekennzeichnet, dass** mindestens die Endabschnitte (1a) der Stäbe (1) einen nicht drehbaren, polygonalen oder ellipsenförmigen Querschnitt, vorzugsweise einen quadratischen Querschnitt, aufweisen und in Öffnungen (5b) komplementärer Form eingeführt werden, welche die Enden (3b) der Kettenglieder (3) aufweisen, so dass letztere durch einen steifen Zusammenbau verbunden sind.

8. Fördervorrichtung nach einem der Ansprüche 3 bis 7, **dadurch gekennzeichnet, dass** das System zur lösbaren Befestigung der Stäbe (1) an den flexiblen Kettengliedern (3) einen U-förmigen Clip-Bügel (8) mit zwei flachen Schenkeln (8a', 8a") und einem Boden (8b) aufweist, der überlappend auf die Enden (1a) der Stäbe (1) montiert wird und von dem mindestens einer der Schenkel (8a') mit Einrichtungen versehen ist, die mit einer komplementären Anordnung der Enden (1a) und der Öffnungen (5b) der Ösen (5) der Kettenglieder (3) zusammenwirken, um diese lösbare Befestigung herzustellen.

9. Fördervorrichtung nach Anspruch 8, **dadurch gekennzeichnet, dass** die freien Enden (8c) der Schenkel (8a', 8b") des Clip-Bügels (8) nach außen umgebogen sind, um einen Rücksprung zu bilden, der sich dem Quergleiten der flexiblen Kettenglieder (3) in Richtung des zentralen Bereichs des Förderbands widersetzt.

10. Fördervorrichtung nach einem der Ansprüche 8 oder 9, **dadurch gekennzeichnet, dass** mindestens einer (8a') der Schenkel (8a', 8a") des Clip-Bügels (8) mit einem Zapfen oder Buckel (9) versehen ist, der nach innen ausgerichtet und in der Nähe seines freien Endes (8c) angeordnet ist, wobei dieser Buckel (9) mit einer Einbuchtung oder Vertiefung (7) zusammenwirkt, die die Stäbe (1) in der Nähe ihrer Enden aufweisen, um jede axiale Bewegung des Clip-Bügels nach außerhalb der Fördervorrichtung zu verhindern.

11. Fördervorrichtung nach einem der Ansprüche 8 bis 10, **dadurch gekennzeichnet, dass** mindestens einer (8a') der Schenkel (8a', 8a") des Clip-Bügels (8) mit einer flexiblen Zunge (10) versehen ist, die auf seiner Außenfläche vorsteht und sich in Richtung seines freien Endes (8c) erstreckt, wobei diese flexible Zunge (10) mit einer Aussparung (11) zusammenwirkt, die in der Innenfläche der Öffnungen (5b) der Ösen (5) der flexiblen Kettenglieder (3) ausgebildet ist, um jedes Quergleiten nach außen der äußeren Kettenglieder (3") und folglich ebenfalls der inneren Kettenglieder (3') zu vermeiden, die auf die Enden (1a) der Stäbe (1) montiert sind.

12. Fördervorrichtung nach einem der Ansprüche 2 bis 7, **dadurch gekennzeichnet, dass** die Befestigung der Stäbe (1) an den flexiblen Kettengliedern (3) aus einem Verbindungssystem "zwischen Haut und Fleisch" besteht, das eine Gewindeschneidschraube (18) enthält, die sich gleichzeitig in das Ende (1a) der Stäbe (1) und in die Wand (5c) einschraubt, die die Öffnung (5b) der Ösen (5) der Kettenglieder (3) begrenzt, in die das Ende (1a) eingeführt ist.

13. Fördervorrichtung nach Anspruch 12, **dadurch gekennzeichnet, dass** die die Öffnungen (5b) der Ösen (5) der Kettenglieder (3) begrenzende Innenwand (5c) mit gegenüberliegenden Rillen (5d) versehen ist, die parallel zur Achse der Öffnungen (5b) ausgerichtet sind und in die die Verbindungs-Gewindeschneidschraube (18) teilweise eingesetzt ist.

14. Fördervorrichtung nach Anspruch 13, **dadurch gekennzeichnet, dass** eine Einbuchtung oder Absenkung (5e), in die eine der Rillen (5d) mündet, in der Außenfläche der Endabschnitte (3a) der Kettenglieder (3) ausgebildet ist.

15. Fördervorrichtung nach einem der Ansprüche 12 bis 14, **dadurch gekennzeichnet, dass** ein U-förmiger Metallbügel (19) mit zwei parallelen flachen Schenkeln überlappend auf den Endabschnitten (1a) der Stäbe (1) angeordnet wird, wobei die freien Enden (19a) dieses Bügels (19) nach außen umgebogen sind und Rücksprünge bilden, gegen die die inneren Kettenglieder (3') der Kette (2) anliegen.
